# EUROPEAN PATENT SPECIFICATION

(11) **EP 1 389 862 B1**
(45) Date of publication and mention of the grant of the patent: **03.11.2004**
(21) Application number: 02360235.2
(22) Date of filing: 08.08.2002
(51) Int. Cl.: H04L 29/06, H04M 7/00

(54) **Lawful interception for VoIP calls in IP based networks**
Legales Abfangen für VOIP Anrufe in einem IP-Fernmeldenetz
Interception legale pour appels VOIP dans un réséau de telecommunications IP

(43) Date of publication of application: 18.02.2004
(73) Proprietor: ALCATEL, 75008 Paris (FR)
(72) Inventor: Shen, Yuzhong, 70499 Stuttgart (DE); Gorges, Thomas, 71638 Ludwigsburg (DE)
(74) Representative: Menzietti, Domenico, Dipl.-Ing

(56) References cited:
- EP-A- 1 111 892
- WO-A-01/89145
- WO-A-02/15627
- WO-A-99/17499
- THERNELIUS F: "SIP, NAT, and Firewalls" MASTER'S THESIS, KUNGST TEKNISKA HÖGSKOLAN, DEPARTMENT OF TELEINFORMATICS - ERICSSON, May 2000 (2000-05), XP002209773

## Description

### TECHNICAL FIELD OF THE INVENTION

This invention is related in general to the field of telecommunications systems. More particularly, the invention is related to a lawful interception device for media streams, in particular VolP calls in lP based networks.

### BACKGROUND OF THE INVENTION

Current lawful interceptions are deployed in class4/class5 switches of PSTN/PLMN networks. ln 3G/UMTS or next generation networks, a connection may be lP end to end. No traffics will go through class 5/class4 switches. That means current lawful interception solutions cannot be used here. One solution may undertake an analysis of lP packets in a related network node, but it's difficult to know which route a call (media stream) will take through the network.

In Thernelius F: "SIP, NAT, and Firewalls' Master's Thesis, Kungst Tekniska Hoegskolan, Department of Teleinformatics-Ericsson, May 200 (2000-05), a method for performing SIP signalling for a media stream is disclosed. The method includes receiving a SIP invite message of a first IP party, adapting at least one connection parameter in the SDP of the received SIP invite message, transmitting the adapted SIP invite message to a second IP party, receiving a SIP response message from the second IP party, adapting at least one connection parameter in the SDP of the received SIP response message, and transmitting the adpated SIP response message to the first IP party.

In WO 02 15627 A a method for providing a mode selection procedure is disclosed. A network element is adapted to perform a mode selection procedure for selecting the same mode for bidirectional communication between the network elements. The mode selection ensures the use of one and the same mode in uplink and downlink direction and thus enables e.g. IP telephony in UMTS using SIP protocol.

In EP-A-1 111 1 892 a method for IP network surveillance is disclosed. An authentication server associated with an end user device determines whether the end user device is under surveillance. In case of surveillance the authentication server notifies a proxy server which copies call signaling information, extracts media stream identification and decoding information thereof and forwards it to an edge router which copies the media stream of the end user.

In WO 01 89145 A a method of monitoring calls with a mobile terminal in an IP-based network is disclosed. Whem the mobile terminal sends an Admission Request message to the Gatekeeper, the Gatekeeper sends a query the Monitoring Station asking whether the mobile terminal is to be monitored. The Monitoring Station sends a reply to the Gatekeeper indicating that the mobile station is to be monitored and provides an IP address where monitored packets are to be sent. The Gatekeeper then sends a monitoring request message to the access router associated with the mobile terminal. The request identifies the mobile terminal to be monitored, instructs the access router to monitor the mobile station, and provides a unique call identification and the IP address where monitored packets are to be sent. When the access router detects a packet associated with the mobile station, the router sends all packets associated with the mobile terminal to the Monitoring Station.

### SUMMARY OF THE INVENTION

It is an object of the invention to provide a lawful interception device for VolP calls in lP based networks.

The inventive lawful interception device detects information in the signalling information being transmitted between two IP parties and generates instructions out of the detected signalling information for instructing a RTP (Real-time Transport Protocol) proxy server to create channels to bypass a VolP call to be intercepted via an intermediate storage medium. Instead of voice each media stream could be intercepted, e.g. data, internet access, e-mail, video, real-time pictures, etc.

In a SIP (Session Initiation Protocol) interception proxy server, where interception should be controlled, applications for interception are running to chose calls for interception. If a call should be monitored, the SIP proxy server has first to hold the invite message from A party. There are listening information in SDP (session description protocol) part of invite message.

SIP proxy server then instructs a RTP proxy server via a RTP proxy control interface to allocate a bypass channel for monitoring the media stream (A channel: sending to A party). The RTP information of this bypass channel (listening part: ip and port) is included in SDP part in the SIP invite message and passed to its destination.

When SIP proxy server has received a response of B party, he instructs RTP proxy via RTP proxy control interface to allocate another bypass channel for monitoring the media stream (B channel: sending to B party). The RTP information of this second bypass channel (listening part: ip and port) is included in SDP part in SIP ok message and send to its origination (A party).

After session setup, both parties will start RTP connections to RTP proxy server depending on connection parameters in its received SIP messages. But those are transparent to A and B. They do not know they are connected to a RTP proxy.

The RTP proxy can start record both media channels (A and B). At the end of this call, e.g. a media file with two sound tracks will be created by RTP proxy.

### Advantages:

- centralized network node to intercept media streams,
- low cost of deployment,
- transparent to end users,
- the RTP proxy can also be used in the same way as above in a media gateway control (MEGACO, H.248) based network or H.323 network.

### BRIEF DESCRIPTION OF THE DRAWINGS

For a better understanding of the present invention, reference is made to the accompanying drawings, in which:
- FIG. 1: is a simplified block diagram of a portion of an exemplary telecommunications network according to the teachings of the prior art;
- FIG. 2: is a simplified block diagram of a portion of an exemplary telecommunications network according to the teachings of the present invention.

### DETAILED DESCRIPTION OF THE INVENTION

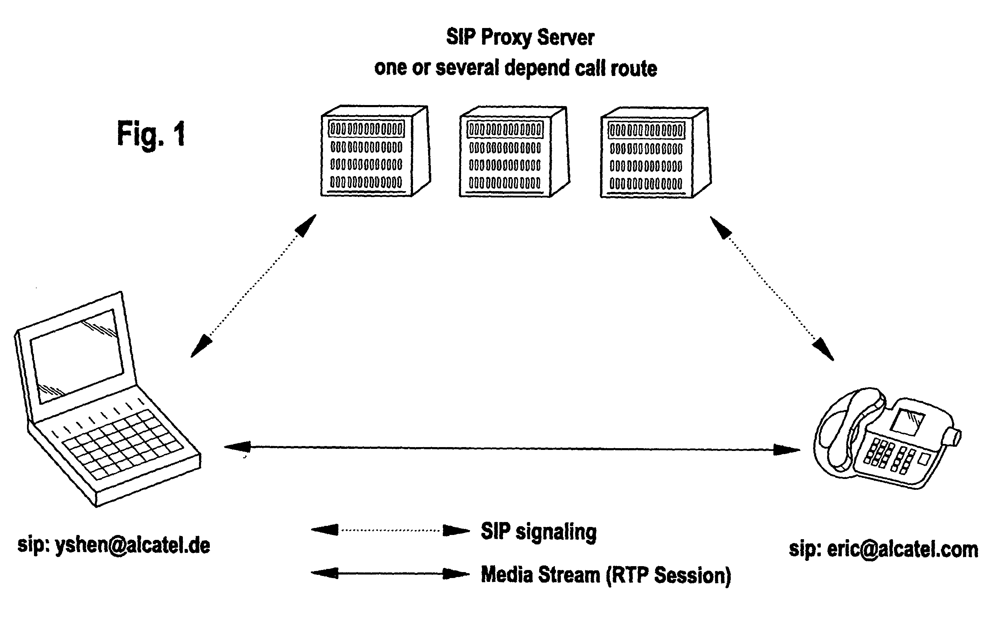

FIG. 1 shows a portion of an exemplary telecommunications network according to the teachings of the prior art.

Two lP parties, e.g. yshen@ alcatel.de and eric@alcatel.com, are interconnected via two networks: a SIP signaling network and a transmission network. Via the SIP signaling network signaling is performed, e.g. a connection is established between the two lP parties. Via the transmission network the information to be transmitted, e.g. voice, data, etc. is transmitted in media streams (RTP session).

In the SIP based network, each SIP proxy server is responsible for signaling and session monitoring. The media stream will go from one lP endpoint to another lP endpoint. There is no need of a centralized media path like in PSTN network. A lawful interception of media stream could be done only in the network layer.

Recording media stream by analyzing network traffics for lawful interception is very expensive, due to the packet route through the lP network could change. Therefor the recording could only be done very closely to the endpoints. Additionaly a resembling of recorded packets is needed. A playing in real time will be difficult.

In the following definition and background information is provided regarding SIP, proxy server, RTP, SDP, etc.

### SIP:

The Session Initiation Protocol (SIP) is an application-layer control (signaling) protocol for creating, modifying and terminating sessions with one or more participants. These sessions include Internet multimedia conferences, Internet telephone calls and multimedia distribution. Members in a session can communicate via multicast or via a mesh of unicast relations, or a combination of these.

SIP invitations used to create sessions carry session descriptions which allow participants to agree on a set of compatible media types. SIP supports user mobility by proxying and redirecting requests to the user's current location. Users can register their current location. SIP is not tied to any particular conference control protocol. SIP is designed to be independent of the lower-layer transport protocol and can be extended with additional capabilities.

The Session Initiation Protocol (SIP) is an application-layer control protocol that can establish, modify and terminate multimedia sessions or calls. These multimedia sessions include multimedia conferences, distance learning, Internet telephony and similar applications. SIP can invite both persons and "robots", such as a media storage service. SIP can invite parties to both unicast and multicast sessions; the initiator does not necessarily have to be a member of the session to which it is inviting. Media and participants can be added to an existing session.

SIP can be used to initiate sessions as well as invite members to sessions that have been advertised and established by other means. Sessions can be advertised using multicast protocols such as electronic mail, news groups, web pages or directories (LDAP), among others.

SIP transparently supports name mapping and redirection services, allowing the implementation of ISDN and Intelligent Network telephony subscriber services. These facilities also enable personal mobility. In the parlance of telecommunications intelligent network services, this is defined as: "Personal mobility is the ability of end users to originate and receive calls and access subscribed telecommunication services on any terminal in any location, and the ability of the network to identify end users as they move. Personal mobility is based on the use of a unique personal identity (i.e., personal number)." Personal mobility complements terminal mobility, i.e., the ability to maintain communications when moving a single end system from one subnet to another.

SIP supports five facets of establishing and terminating multimedia communications:
User location: determination of the end system to be used for communication;
User capabilities: determination of the media and media parameters to be used;
User availability: determination of the willingness of the called party to engage in communications;
Call setup: "ringing", establishment of call parameters at both called and calling party;
Call handling: including transfer and termination of calls.

SIP can also initiate multi-party calls using a multipoint control unit (MCU) or fully-meshed interconnection instead of multicast. Internet telephony gateways that connect Public Switched Telephone Network (PSTN) parties can also use SIP to set up calls between them.

SIP is designed as part of the overall IETF multimedia data and control architecture currently incorporating protocols such as the real-time transport protocol (RTP) for transporting real-time data and providing QoS feedback.

A request and a response form together a transaction. SIP uses e.g. invite and ack messages to build up connections. Other messages used are e.g. ok, bye, options, register, cancel. SIP parties are identified via a SIP-ULR, e.g.: sip:clientname@hostaddress. Each client may transmit requests to a proxy server or directly to an lP address.

An establishment of a connection is perfomed is three steps: sending an invite (request) message from a first lP party to a second IP party, sending an ok (response) message from the second lP party to the first IP party, sending an ack (response) message from the frist lP party to the second lP party. The invite message includes as much information as needed to allow the second lP party to judge whether a connection is wanted or not. The ack message is an acknowledgement, which serves to increase savety of the connection. SIP is thus not dependent on TCP or UDP.

The SIP according to the invention is the SIP currently standardized and modifications thereof and equivalents thereof.

### RTP:

The Audio/Video Transport Working Group of IETF was formed to specify a protocol for real-time transmission of audio and video over UDP and lP multicast. This is the Real-time Transport Protocol, RTP, together with its associated profile for audio/video conferences and payload format documents. The payload formats currently under discussion include a number of media specific formats (MPEG-4, DTMF, PureVoice) and FEC techniques applicable to multiple formats (parity FEC, Reed-Solomon coding). RTP is used to replace a normal circuit-switched trunk between two nodes.

The real-time transport protocol (RTP) is a payload format to be used for e.g. Adaptive Multi-Rate (AMR) and Adaptive Multi-Rate Wideband (AMR-WB) encoded speech signals. RTP provides end-to-end network transport functions suitable for applications transmitting real-time data, such as audio, video or simulation data, over multicast or unicast network services. RTP does not address resource reservation and does not guarantee quality-of service for real-time services. The data transport is e.g. augmented by the control protocol RTCP (Real-time Transport Control Protocol) to allow monitoring of the data delivery in a manner scalable to large multicast networks, and to provide minimal control and identification functionality. RTP and RTCP are designed to be independent of the underlying transport and network layers. The protocol supports the use of RTP-level translators and mixers. The data transported by RTP in a packet, for example audio samples or compressed video data. A data packet includes e.g. the fixed RTP header, a possibly empty list of contributing sources, and the payload data.

The RTP according to the invention is the RTP currently under discussion and modifications thereof and equivalents thereof. RTP may be a protocol for both audio and video, or audio only, or video only, or audio, video and data, or audio and data, etc. One modification of RTP is e.g. RTP/I, an application level real-time protocol for distributed interactive media. Typical examples of distributed interactive media are shared whiteboards, networked computer games and distributed virtual environments. RTP/I defines a standardized framing for the transmission of data and provides mechanisms that are universally needed for this media class. Thereby RTP/I enables the development of reusable functionality and generic services that can be employed for multiple distributed interactive media. Examples for this kind of functionality are the ability to record sessions, to support late coming participants, and to provide security services. RTP/I is a protocol that follows the ideas of application level framing and integrated layer processing. It has been designed to be independent of the underlying network and transport layers. Thus RTP/I as a modified RTP protocol that reuses many aspects of RTP while it is thoroughly adapted to the specific needs of distributed interactive media.

### Proxy, proxy server:

An intermediary program that acts as both a server and a client for the purpose of making requests on behalf of other clients. Requests are serviced internally or by passing them on, possibly after translation, to other servers. A proxy interprets, and, if necessary, rewrites a request message before forwarding it.

### Server:

A server is an application program that accepts requests in order to service requests and sends back responses to those requests. Servers are either proxy, redirect or user agent servers or registrars.

### User agent client (UAC), calling user agent:

A user agent client is a client application that initiates the SIP request.

### SDP:

The Session Description Protocol (SDP) is intended for describing multimedia sessions for the purposes of session announcement, session invitation, and other forms of multimedia session initiation.

The purpose of SDP is to convey information about media streams in multimedia sessions to allow the recipients of a session description to participate in the session. SDP is primarily intended for use in an internetwork, although it is sufficiently general that it can describe conferences in other network environments.

A multimedia session, for these purposes, is defined as a set of media streams that exist for some duration of time. Media streams can be many-to-many. The times during which the session is active need not be continuous.

Thus far, multicast based sessions on the Internet have differed from many other forms of conferencing in that anyone receiving the traffic can join the session (unless the session traffic is encrypted). In such an environment, SDP serves two primary purposes. It is a means to communicate the existence of a session, and is a means to convey sufficient information to enable joining and participating in the session. In a unicast environment, only the latter purpose is likely to be relevant.

Thus SDP includes:
o Session name and purpose
o Time(s) the session is active
o The media comprising the session
o Information to receive those media (addresses, ports, formats and so on)

As resources necessary to participate in a session may be limited, some additional information may also be desirable:
o Information about the bandwidth to be used by the conference
o Contact information for the person responsible for the session

In general, SDP must convey sufficient information to be able to join a session (with the possible exception of encryption keys) and to announce the resources to be used to non-participants that may need to know.

SDP includes:
o The type of media (video, audio, etc)
o The transport protocol (RTP/UDP/lP, H.320, etc)
o The format of the media (H.261 video, MPEG video, etc)

For an lP multicast session, the following are also conveyed:
o Multicast address for media
o Transport Port for media

This address and port are the destination address and destination port of the multicast stream, whether being sent, received, or both.

For an IP unicast session, the following are conveyed:
o Remote address for media
o Transport port for contact address

The semantics of this address and port depend on the media and transport protocol defined. By default, this is the remote address and remote port to which data is sent, and the remote address and local port on which to receive data. However, some media may define to use these to establish a control channel for the actual media flow.

The SDP according to the invention is the SDP currently standardized and modifications thereof and equivalents thereof.

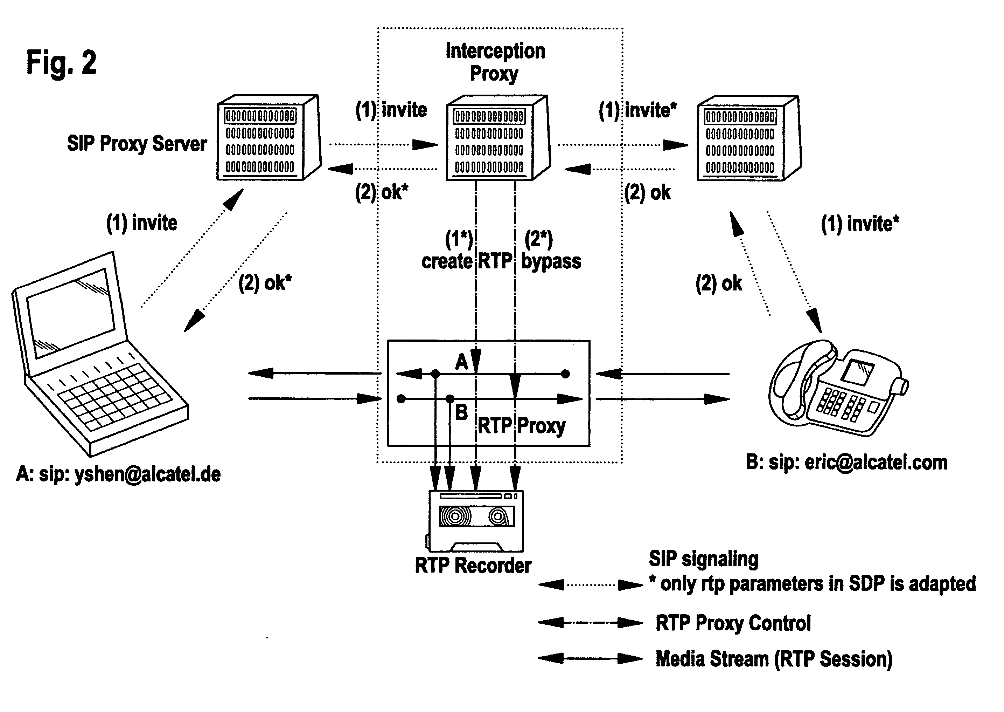

FIG. 2 shows a portion of an exemplary telecommunications network according to the teachings of the present invention.

Like in fig. 1 two lP parties, e.g. yshen@alcatel.de and eric@alcatel.com, are interconnected via two networks: a SIP signaling network and a transmission network. Via the SIP signaling network signaling is performed, e.g. a connection is established between the two lP parties. Via the transmission network the information to be transmitted, e.g. voice, data, etc. is transmitted in media streams (RTP session).

Different from fig. 1 a lawful interception device is included in fig. 2. The lawful interception device is e.g. a processor with particular software. The processor is e.g. a digital signal processor, a controller, a microprocessor or the like. Instead of one processor two or more processors could be used. Two or more processors could be located at different sites. One processor could be used to perform SIP proxy server operations and another processor could be used to perform RTP proxy server operations. In general, one, two or more hardwares could be used to run one, two, or more softwares. Each software could in addition be run in parts on different hardware.

The lawful interception device includes a SIP (Session Initiation Protocol) proxy server or a MGC (Media Gateway Controller) to detect information in the signalling information being transmitted between two lP (Internet Protocol) parties and to generate instructions out of the detected signalling information for instructing a RTP (Real-time Transport Protocol) proxy server to create channels to bypass a media stream to be intercepted via an intermediate storage medium. Media streams are e.g. VolP, data, internet access, e-mail, video, real-time pictures, music, video clips, video games, etc. The storage medium could be a compact disk, a magnetic storage medium, a read access memory, or the like.

The method for performing SIP signaling for a media stream includes the following steps:
receiving a SIP invite message of a first lP party,
adapting at least one connection parameter in the SDP (Session Description Protocol) of the received SIP invite message,
transmitting the adapted SIP invite message to a second lP party,
receiving a SIP response message of the seond lP party,
adapting at least one connection parameter in the SDP (Session Description Protocol) of the received SIP response message,
transmitting the adapted SIP response message to the first lP party.

At least one RTP parameter includes information about a bypass channel, an address, or a port. The RTP parameters sent to both lP parties differ from each other.

After receipt of the SIP invite message of the first lP party the SIP interception proxy server sends a request to the RTP interception proxy server to assign at least two channels for bothway communication. The interface used to communicate between SIP interception proxy server and RTP interception proxy server is a XML based API. The number of channels to be assigned may vary dependent of the amount of data to be transmitted, of the bandwith requested, of the quality of service requested, of the kind of information to be transmitted, e.g. voice, voice and data, voice and video, etc. At least one channel is assigned to transmit information between the RTP interception proxy server and the terminal of the first lP party. The terminal could be a phone, a laptop, a personal computer, a screenphone, a mobile phone, etc. At least one other channel is assigned to transmit information between the RTP interception proxy server and the terminal of the second lP party.

Assume channel A at the RTP interception proxy server is assigned to transmit information between the second IP terminal and the terminal of the first IP party, and channel B is assigned to transmit information between the the terminal of the first lP party and the second lP terminal. Then the RTP interception proxy server sends information about the assignment of channels A and B to the SIP interception proxy server. The SIP interception proxy server includes information about channel A in the invite message to be send to the second lP party. The information about channel A is advantageously included in the connection parameter information to be included in the SDP of the SIP invite message.

After receipt of the SIP response message of the seond lP party, which corresponds to an ok message stating that a connection to the first lP party is desired, the SIP interception proxy server exchanges the connection parameter included in the SDP part of the ok message by the information about channel B. The modified ok message including the information about channel B is send to the first IP party.

Thus the first lP party will send data to channel B and receive data via channel A of the RTP interception proxy server. The second lP party will send data to channel A and receive data via channel B of the RTP interception proxy server. Within the lawful interception device the intermediate storage medium is connected to both channel A and B. Thus the information flow between both IP parties will transfer the intermediate storage medium and thus interception is enabled. The first party is not aware on which channel the second party is sending, and the second party is not aware on which channel the first party is sending. Thus interception is transparent regarding the two lP parties.

A computer program for performing at least part of the steps of the inventive method could be used as an upgrade software, which is sold e.g. to service providers, which will upgrade one or more SIP proxy server thus enabling a usual SIP proxy server having the functionality of an SIP interception proxy server. The computer program includes at least the following steps:
adapting at least one connection parameter in the SDP (Session Description Protocol) of the received SIP invite message,
adapting at least one connection parameter in the SDP (Session Description Protocol) of the received SIP response message.

The computer program could also be programmed to perform all steps of the method as described above.

Within an lP network one, two, or more SIP proxy servers could be used, one, two, or more SIP interception proxy servers could be used, one, two, or more RTP proxy servers could be used, and one, two, or more RTP interception proxy servers could be used.

The IP network could be a wireline network, a wireless network, or a combination of both.

### List of abbreviations:

- 3G: Third Generation
- API: Application Programmer Interface
- AMR: Adaptive Multi-Rate
- AMR-WB: AMR-Wideband
- DTMF: Dual-Tone Multi-Frequency
- FEC: Forward Error Correction
- H248: ITU standard
- H261: ITU standard
- H320: ITU standard
- H323: ITU standard
- IETF: Internet Engineering Task Force
- IP: Internet Protocol
- ISDN: Integrated Services Digital Network
- LDAP: Lightweight Directory Access Protocol
- MEGACO: Media Gateway Controller
- MCU: Multipoint Control Unit
- MPEG: Motion Picture Expert Group
- MGC: Media Gateway Controller
- NGN: Next Generation Network
- PSTN: Public Switched Telephone Network
- PLMN: Public Land Mobile Network
- QoS: Quality of Service
- RTCP: Real-time Transport Control Protocol
- RTP: Real-time Transport Protocol
- SDP: Session Description Protocol
- SIP: Session Initiation Protocol
- TCP: Transmission Control Protocol
- UAC: User Agent Client
- UDP: User Datagram Protocol
- UMTS: Universal Mobile Transmission System
- VolP: Voice over lP
- XML: extensible Markup Language

## Claims

1. Lawful interception device including a Session Initiation Protocol proxy server or a Media Gateway Controller adapted to detect information in the signalling information being transmitted between two Internet Protocol parties and **characterised by** being adapted to generate instructions out of the detected signalling information for instructing a Real-time Transport Protocol proxy server to create channels to bypass a media stream to be intercepted via an intermediate storage medium.

## Patentansprüche

1. Legale Abfangeinrichtung mit einem Session-Initiation-Protocol-Proxy-Server oder einer Medien-Gateway-Steuerung, der bzw. die geeignet ist, Informationen in der zwischen zwei Internet-Protokoll-Teilnehmern übertragenen Zeichengabenachricht zu erfassen, und
**dadurch gekennzeichnet ist, dass** er bzw. sie geeignet ist, aus der erfassten Zeichengabeinformation Anweisungen für einen Echtzeit-Transportprotokoll-Proxy-Server zu erzeugen, Kanäle für die Umleitung eines abzufangenden Medienstroms über ein Zwischenspeichermedium einzurichten.

## Revendications

1. Dispositif d'interception licite comprenant un serveur mandataire de protocole de lancement de session ou un contrôleur de passerelle de média adaptés pour détecter des informations dans les informations de signalisation étant transmises entre deux correspondants IP (protocole internet) et **caractérisé en ce qu'**il est adapté pour générer des instructions parmi les informations de signalisation de signalisation détectées pour donner pour instruction à un serveur mandataire de protocole de transport en temps réel de créer des voies pour contourner un train de données de média à intercepter, via un support de stockage intermédiaire.
